(19) Europäisches Patentamt / European Patent Office / Office européen des brevets

(11) **EP 2 593 343 B1**

(12) **EUROPEAN PATENT SPECIFICATION**

(45) Date of publication and mention
of the grant of the patent:
**07.09.2016 Bulletin 2016/36**

(21) Application number: **11781888.0**

(22) Date of filing: **14.07.2011**

(51) Int Cl.:
**B60W 30/14** *(2006.01)*    **G01C 21/34** *(2006.01)*

(86) International application number:
**PCT/SE2011/050950**

(87) International publication number:
**WO 2012/008913 (19.01.2012 Gazette 2012/03)**

(54) **CRUISE CONTROL WITH CONVEX COST FUNCTION**

GESCHWINDIGKEITSREGELUNG MIT KONVEXER KOSTENFUNKTION

CRÉATION D'UNE FONCTION DE COÛT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2010 SE 1050809**

(43) Date of publication of application:
**22.05.2013 Bulletin 2013/21**

(73) Proprietor: **Scania CV AB
151 87 Södertälje (SE)**

(72) Inventors:
• **EVALDSSON, Martin
S-131 31 Nacka (SE)**
• **SÖDERGREN, Maria
S-141 70 Segeltorp (SE)**
• **JOHANSSON, Oskar
S-112 19 Stockholm (SE)**

(74) Representative: **Scania CV AB
Patents, GP 117kv
151 87 Södertälje (SE)**

(56) References cited:
US-A- 6 076 622          US-A1- 2004 068 359
US-A1- 2009 118 946     US-A1- 2010 049 400

• **HELLSTROM E ET AL: "Look-ahead control for
heavy trucks to minimize trip time and fuel
consumption", CONTROL ENGINEERING
PRACTICE, PERGAMON PRESS, OXFORD, GB,
vol. 17, no. 2, 1 February 2009 (2009-02-01), pages
245-254, XP025801215, ISSN: 0967-0661, DOI:
10.1016/J.CONENGPRAC.2008.07.005 [retrieved
on 2008-08-15]**

**Description**

**Technical field**

The present invention relates to a method for creating a cost function according to the preamble of claim 1, to a control unit according to the preamble of claim 18 and to a motor vehicle according to the preamble of claim 19. The present invention relates also to a computer programme and a computer programme product.

**Background**

In motor vehicles, e.g. passenger cars, trucks, buses or the like, cost functions are often employed in various optimisation algorithms in order to determine various parameters which are used for controlling the vehicle's functions. Such optimisation algorithms are used for example in control of cruise controls, control of gear choices and control of gear changing in automatic gear change systems, and in regulation of engine response, in regulation of an engine fan or in regulation of combustion emissions. In this specification the invention is exemplified for use in a cruise control system, e.g. a look-ahead cruise control (LACC), i.e. an intelligent cruise control which makes use of knowledge about the nature of the road ahead. However, the invention concerns general creation of a cost function and is therefore not restricted to implementation, as herein exemplified, in a cruise control. The invention may therefore be used at least where optimisation algorithms are used as above.

An object of cruise control is to achieve a uniform predetermined vehicle speed and to limit the highest speed which the motor vehicle can have. If the vehicle exceeds the highest speed allowed by it, the cruise control is allowed to brake the vehicle. An overriding object of the cruise control is to keep fuel consumption down as much as possible, since this is a factor which very greatly affects profitability for vehicle owners, e.g. haulage companies or the like.

An experienced driver driving a vehicle without cruise control may reduce fuel consumption by adapting his/her driving to the characteristics of the road ahead, so that unnecessary braking and/or fuel-consuming acceleration can be avoided. Current LACCs try to mimic the experienced driver's adaptation of the driving of the vehicle on the basis of knowledge about the road ahead so that fuel consumption can be kept at as low a level as possible.

To achieve lowest possible fuel consumption, current LACCs therefore try to adopt an optimum vehicle peed profile based on their knowledge of the road ahead. This knowledge may for example be based on information related to topology and road curvature, to a prevailing traffic situation or to the state of a section of road ahead. Such information is available inter alia from maps, positioning systems, e.g. GPS (global positioning system), and weather reports.

On the basis of such information a cruise control can calculate an optimum speed profile for the vehicle to follow. These optimisation calculations often employ cost functions, in which case the optimisation is based on minimising one or more such cost functions. In other words, the cruise control's optimisation problem may be expressed as

$$\min f(x) \tag{eq. 1}$$

in which

- $f(x)$ is the cost function, and
- $x \in X$, where $X$ represents all permissible states for the variable x.

The cost function may also be multidimensional, i.e. it may depend on more than one variable/aspect, examples of such aspects being journey time and the weight of fuel consumed. In previously known cruise control systems, the journey time aspect has been weighed against the fuel consumed aspect. The cost function has then been defined such that these aspects are weighed against one another in a linear way by means of weighting coefficients:

$$f = a_1 T + a_2 M \tag{eq. 2}$$

in which

- $f$ is the cost function,
- $T$ is the journey time,
- $M$ is the weight of fuel consumed, and

- $\alpha_1$ and $\alpha_2$ are weighting coefficients.

Of these:

$$T = \int_0^{S_{tot}} \frac{1}{v} ds$$

and

$$M = \int_0^{S_{tot}} m_f ds \qquad \text{(eq. 3)}$$

in which

- $v$ is the vehicle speed,
- $m_f$ is fuel consumed per unit distance travelled, and
- $S_{tot}$ is the length of the section of road covered by optimisation.

The magnitude of the weighting coefficients relative to one another steers the solution to the optimisation problem in equation 1 either towards shorter journey time with high fuel consumption or towards longer journey time with low fuel consumption. In arriving at this solution and hence the cruise control desired, the choice of the weighting coefficients is very important. Their magnitude is also very important in that it affects the computational complexity when equation 1 is evaluated.

Determining these weighting coefficients for the previously known cruise control systems so that the desired solution to the optimisation problem is achieved, while at the same time keeping the complexity of the numerical calculations at an acceptable level, has previously led to significant evaluation work.

Moreover, the linear cost function according to equation 2 is very difficult to add further aspects to, since all the weighting coefficients have then to be calculated again.

The linear cost function also results in the optimisation procedure, i.e. the search for minima according to equation 1, becoming ineffective. This is described in more detail below.

US6076622 discloses a method for optimization of a parameter in a motor vehicle using a cost function, which depends on at least a first and a second term indicates a mutual relationship between said at least first and second terms, and assumes a function value, which cost function is configured such that dependency on at least one further term can be introduced into said cost function, which will thereupon maintain said mutual relationship between said at least first and second terms and indicate a mutual relationship between said at least one further term and said at least first and second terms.

Hellstrom E et al:"Look-Ahead control for heavy trucks to minimize trip time and fuel consumption", Control engineering Practice, Pergamon Press Oxford, GB, vol. 17, no 2, 1 Fevruary 2009 (2009-02-01), pages 245-254, XP025801215, ISSN: 0967-0661, DOI: 10,1016/J.Concengprac. 2008. 07. 005 discloses a cruise control with optimization based on travel time and fuel weight.

**Brief description of the invention**

An object of the present invention is to propose a solution to the above problem.

The present invention relates to the aforesaid method for creating a cost function according to the characterising part of claim 1, to the aforesaid control unit according to the characterising part of claim 16 and to the aforesaid motor vehicle according to the characterising part of claim 17. The present invention relates also to the aforesaid computer programme and the aforesaid computer programme product.

The problems indicated above are solved by the present invention in that the cost function created according to it is very easy to expand to comprise substantially any desired number of terms. This is achieved by the cost function being so configured that upon the introduction of dependency on at least one further term it maintains a mutual relationship between the original at least first and second terms, and also indicates a mutual relationship between the at least one further term and the original at least first and second terms.

Each of these terms is based on an aspect which is relevant to the optimisation problem. Using the cost function according to the invention therefore allows the possibility of its adaptation to dependency on a suitable number of aspects. This makes it easy for the cost function to be adapted to different implementations which depend on different aspects and/or different numbers of aspects.

According to the present invention, aspect values which form part of the cost function are standardised. This standardisation of aspect values results in the scaling of the cost function becoming suited to numerical calculations, since the function value can be kept to a suitable magnitude.

The standardisation of the aspect values may be done with, for example, reference values obtained from a conventional cruise control, e.g. with a reference value for the journey time aspect and a reference value for the weight of fuel consumed aspect. Such standardisation means that the cost function according to the invention and its optimisation are placed in direct relation to corresponding cost function and optimisation for the conventional cruise control. A direct comparison is thus arrived at between the optimisation of the cost function according to the invention and the optimisation of the cost function of a conventional cruise control.

According to the invention, the respective at least first and second terms are each based on a standardised aspect value, which standardisation is effected by using a reference value for each aspect. If the respective aspect values each assume a value which is close to these reference values, the cost function arrives at a function value which is substantially one (1). Such a function value is obviously well suited to numerical calculations.

If the aspect value for the at least one further term keeps to values which that aspect normally assumes, i.e. values closely corresponding to those for the conventional cruise control, the cost function maintains substantially the function value which it had before the introduction of the at least one further dependency. In normal driving of the vehicle, the aspect value for the at least one further term will arrive at values close to those for the conventional cruise control. The function value can therefore be kept to a suitable magnitude even after the introduction of dependency on at least one further term.

According to an embodiment of the present invention, aspect values which form part of the cost function are squared. This squaring of the aspect values causes the slope of the cost function to be such that the solution is steered towards desirable points, thereby simplifying numerical calculations and also making the calculations effective.

The embodiments for the present invention are indicated in the dependent claims and are described in more detail below.

**Brief list of drawings**

The invention is explained in more detail below with reference to the attached drawings, in which similar reference notations are used for similar items, and in which

Figure 1 is a graph of a standardised circular cost function,
Figure 2 is a graph of a standardised circular cost function, and of a traditional linear cost function,
Figure 3 is a graph of a standardised circular cost function, and of a traditional linear cost function, and
Figure 4 depicts schematically a control unit.

Description of preferred embodiments

According to the present invention, the cost function is created such that it depends on at least a first term and a second term which have a mutual relationship between them. The cost function is also so configured that it can be expanded to cover one or more further terms. According to the invention, the cost function is created such that when it is expanded to depend on the first term, the second term and at least one further term it still maintains the same mutual relationship between the first term and the second term. The cost function also indicates a mutual relationship between the at least one further term and the first and second terms.

The cost function is also defined such that when the aspect value for the at least one further term is near in magnitude to its reference value, it has substantially the same function value when it depends only on the first term and the second term and when it depends on the first term, the second term and the at least one further term.

The fact that the mutual relationships between the first and second terms and between the first and second terms and the at least one further term, along with the fact that the function value is maintained at approximately the same value even when the cost function is expanded to depend on more terms, makes it easy to expand the cost function to depend on more terms. As described in more detail below, each of these terms is based on an aspect which is relevant to the optimisation problem. Being able to expand the cost function is very advantageous, since control of certain parameters, e.g. in a cruise control or in an automatic gear change system, does in fact depend on more than two aspects. Moreover, the dependencies may grow over time such that a parameter may depend during a period of time on two aspects but depend during another period of time on more than two aspects. To be able to optimise the control of the vehicle, e.g. so that minimum fuel consumption can be achieved for different vehicles, or for the same vehicle during different periods of time, the cost function needs to be adjusted so that it depends on more, or fewer, aspects. This is easy to accomplish with the present invention.

According to an embodiment of the present invention, the terms in the cost function, i.e. the respective first, second and at least one further term, are each based on an aspect which is related to said vehicle. The respective first and second terms are typically related, in the case of cruise control, to journey time and weight of fuel consumed. The at least one further term may, according to an embodiment of the present invention, be related to driving experience. This is described in more detail below. As a specialist in the field will appreciate, other aspects related to the vehicle may also be used for the cost function.

According to an embodiment of the present invention, the terms in the cost function, i.e. the respective first, second and the at least one further term, each take the form of a standardised aspect value. The aspect values are each standardised with an appropriate reference value for each aspect. For example, the value for the journey time aspect is standardised with a reference value for journey time, and a value for the weight of fuel consumed aspect is standardised with a reference value for weight of fuel consumed.

Standardising the aspect values in the cost function means that the scaling of the cost function is suited to numerical calculations, since the function value can be kept to a magnitude appropriate to this purpose. This makes it possible, if suitable reference values are chosen with which to standardise the aspect values, to control the scaling of the cost function, i.e. the magnitude of the cost function. Hence it is possible by means of the standardisation to choose the magnitude of the cost function such that it has, for normally occurring magnitudes of the aspect values, a value which is suited to numerical calculations and therefore reduces the computational complexity of the system. A suitable such value is one (1). In other words, standardising the cost function so that it has a function value near to one reduces the computational complexity. One skilled in the art will appreciate that different processors or other calculation devices may have different most advantageous function values about which to do their calculations, and also that the standardisation can be adapted so that such suitable function values are arrived at when such processors or other calculation devices are used for these calculations.

According to an embodiment of the present invention, corresponding values from a conventional cruise control are used as reference values. Thus what is used as a reference journey time is the journey time which would have been achieved by a conventional cruise control, and what is used as reference value for weight of fuel consumed is the weight of fuel consumed which would have been achieved by a conventional cruise control, and so on for other aspect values.

Using reference values from a conventional cruise control provides assurance of using reference values of suitable magnitudes, since it may be assumed that the aspect values for a cruise control which applies the present invention will be relatively near to those for a conventional cruise control. This means that the scaling of the cost function causes it to assume values which are near to one. This results, as described above, in computational advantages.

Standardisation with corresponding values for a conventional cruise control also affords a further advantage in that performance for a cruise control according to the invention can be related directly to a conventional cruise control. This is illustrated and described in more detail below.

According to an embodiment of the present invention, the terms in the cost function take the form of squared standardised aspect values. The aspect values will thus in this case have been first standardised with a suitable reference value, e.g. a corresponding value for a conventional cruise control, and will thereafter have been squared.

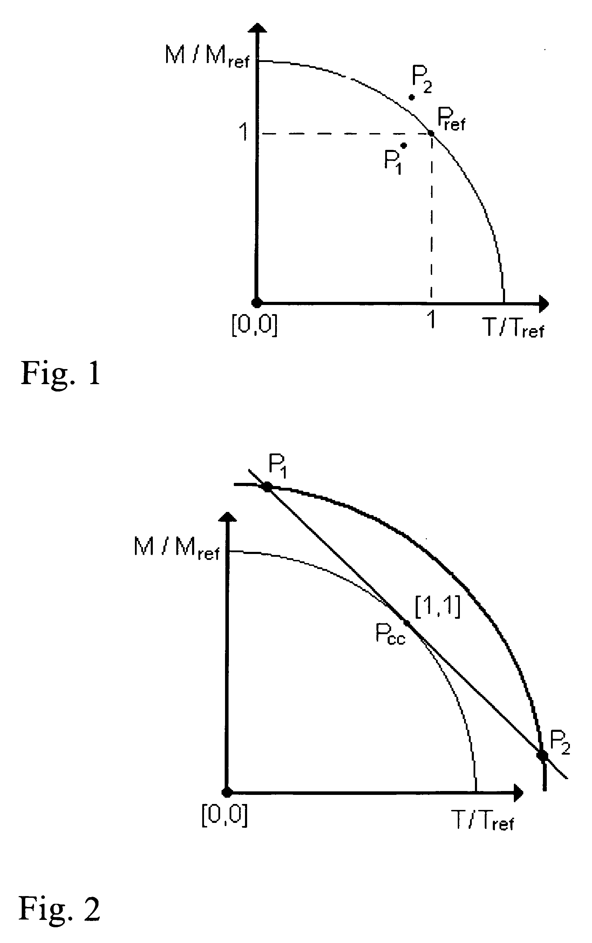

A cost function comprising two such squared standardised aspect values may be regarded as a circular representation of the cost function which differs from the traditional linear representation such as expressed for example in equation 2 above. According to the circular representation of the cost function, the cost is regarded as the radius of a circle with its centre at the origin. This is illustrated in Figure 1, in which the x axis denotes standardised and squared journey time and the y axis standardised and squared weight of fuel consumed. The cost function depicted here is defined as

$$f = \frac{1}{\sqrt{2}} \sqrt{\left(\frac{T}{T_{ref}}\right)^2 + \left(\frac{M}{M_{ref}}\right)^2} \qquad \text{(eq. 4)}$$

in which

- $T$ is the journey time,
- $T_{ref}$ is a reference journey time,
- $M$ is a weight of fuel consumed, and
- $M_{ref}$ is a reference value for a weight of fuel consumed.

In this circular representation of the cost function, the origin [0.0] is the optimum solution, but not a practically possible solution, since journey time and weight of fuel consumed would then both be zero. Other solutions in the $(\frac{T}{T_{ref}}, \frac{M}{M_{ref}})$ plane which are at the same distance from the origin are of equal value. In other words, solutions along a given arc are equally good solutions, whereas solutions which are further away from the origin than that arc are bad solutions. This is exemplified in Figure 1, which shows that if for example reference values for a conventional cruise control are used for standardisation as described above, the arc on which the point $P_{ref}$ is situated represents solutions which are just as good as the solutions for the conventional cruise control, since $f(T_{ref}, M_{ref})=1$ for these solutions. The point P1 which represents a solution for a cruise control according to the present invention is nearer to the origin than $P_{ref}$, resulting in a more optimised solution than that represented by $P_{ref}$. $P_2$ is further away from the origin than $P_{ref}$, which indicates that $P_2$ represents a worse solution than by the conventional cruise control.

As clearly indicated by the illustration in Figure 1, the quadratic and standardised terms in the cost function result in a very easily comprehensible comparison between the cruise control according to the invention and a conventional cruise control, since all solutions which are better than the conventional cruise control result in function values which are within the arc formed by all the points with the function value one for the cost function.

It is also possible to rewrite equation 4 without using square roots, without losing the advantages of using squared aspect values. This is exemplified for other equations below.

Figure 2 further illustrates the differences between a linear representation and a circular representation of the cost function. The traditionally used linear representation of the cost function is represented in Figure 2 by the straight line between points $P_1$, $P_{cc}$ and $P_2$, in which $P_{cc}$ corresponds to $P_{ref}$ in Figure 1 above. According to this traditionally used representation, the respective solutions corresponding to $P_1$, $P_{cc}$, and $P_2$ are equally valid, since they are on the same linear line. Looking at Figure 2 in more detail, however, shows clearly that the solutions at $P_1$ and $P_2$ are far away from the solution for a conventional cruise control, i.e. they are far away from the solutions on the arc with the function value one. The solutions at $P_1$ and $P_2$ are in practice not desirable in that their speed profiles are too far away from the speed profile for a conventional cruise control. In other words, the respective speed profiles corresponding to $P_1$ and $P_2$ are far away from a set speed which is chosen by a driver to serve as an input signal for a cruise control.

In contrast, a circular representation shows clearly that the solutions at points $P_1$ and $P_2$ are not desirable, since they are situated outside the arc and are therefore further away from the origin than the solution points for a conventional cruise control. In other words, the circular representation shows that $P_1$ and $P_2$ are on a different arc from $P_{cc}$, which is nearer to the origin. Thus the respective standardised squared cost functions for the points $P_1$ and $P_2$ assume a higher value than value for the standardised squared cost function for the point $P_{cc}$.

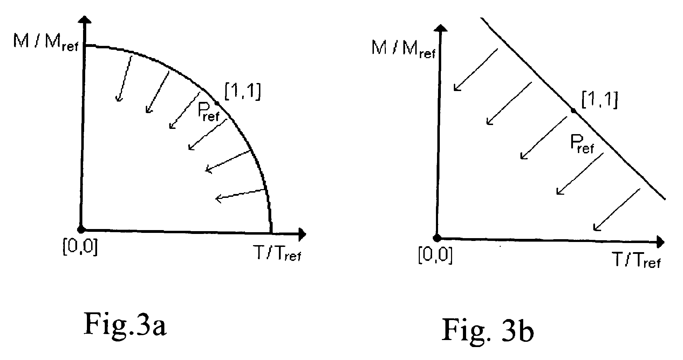

Figures 3a-b illustrate schematically the differences between the slopes of the traditionally used linear representation for the cost function and of the circularly represented cost function according to the invention. The slopes of the linearly represented cost function run downwards to the left, as per the arrows in Figure 3b. In the case of the circularly represented cost function according to the present invention, depicted in Figure 3a, all the slopes run instead directly towards the origin, resulting in solutions situated at desirable points, with comparable gains on time and on fuel. The direction of the slopes steers the solution towards a diagonal which runs through the origin at an angle of 45° to the horizontal axis. This is because points situated far away from the diagonal are regarded as less desirable when using the circularly represented cost function. Optimisation of the circular cost function therefore seeks a solution towards these desirable points along the diagonal, so the optimisation will be directed towards this diagonal. A solution close to this diagonal is desirable in that it is felt to be good and natural for a driver of the vehicle, since solutions close to the diagonal result in speed profiles resembling those of conventional cruise controls.

In the case of the traditionally used linear representation, only certain slopes run towards the desirable points along the diagonal, as illustrated in Figure 3b, whereas the great majority run towards non-optimum points aside from the diagonal. A quicker solution to the optimisation problem is thus arrived at by using a cost function according to the present invention than by using a linearly represented cost function, since points which are far from the diagonal are valued worse with the circularly represented cost function than with the linearly represented cost function. This is also illustrated in Figure 2, in which the points $P_1$ and $P_2$ are as desirable as the diagonal point $P_{cc}$ according to the linearly represented cost function, whereas they are less desirable than $P_{cc}$ according to the circularly represented cost function according to the invention.

By means of weighting coefficients it is possible for the relationship between the constituent terms of the cost function to be indicated such that the various terms are given different weights in the cost function, i.e. they are valued differently. The cost function may then be regarded as an elliptical representation, since the various weighting coefficients are given mutually different values, resulting in different extents along the x axis and the y axis in the $(\frac{T}{T_{ref}}, \frac{M}{M_{ref}})$ plane.

According to an embodiment of the present invention, the mutual relationship between the terms in the cost function takes the form of convex combinations. The weighting coefficients in the cost function therefore take the form here of convex combinations. When convex combinations are used for the weighting coefficients, the resulting values are between zero and one, and the aggregate of the weighting coefficients remains one. An example of such a cost function is

$$f = \sqrt{\beta \left(\frac{T}{T_{ref}}\right)^2 + (1 - \beta)\left(\frac{M}{M_{ref}}\right)^2} \qquad \text{(eq. 5)}$$

in which

- $T$ is the journey time,
- $T_{ref}$ is a reference journey time,
- $M$ is a weight of fuel consumed,
- $M_{ref}$ is a reference value for a weight of fuel consumed, and
- $\beta$ is a weighting coefficient, where $\beta \in [0.1]$.

As indicated above, the cost function according to equation 5 may also be written in a form in which the square root is not used, such as

$$f = \beta \left(\frac{T}{T_{ref}}\right)^2 + (1 - \beta)\left(\frac{M}{M_{ref}}\right)^2 \qquad \text{(eq. 6)}$$

in which

- $T$ is the journey time,
- $T_{ref}$ is a reference journey time,
- $M$ is a weight of fuel consumed,
- $M_{ref}$ is a reference value for a weight of fuel consumed, and
- $\beta$ is a weighting coefficient, where $\beta \in [0.1]$.

Using convex combinations as weighting coefficients provides assurance that the cost function will have a function value close to one if standardisation is applied and if the aspect values assume values relatively near to their respective reference values as above. This magnitude of the function value facilitates numerical calculations which involve the cost function and therefore generates less computational complexity. Using convex combinations as weighting coefficients to indicate the relationship between the terms in the cost function therefore means that the function value of the cost function is not affected by mutual relations between the coefficients, since their aggregate value amounts to one.

According to traditionally used cost functions such as that indicated in equation 2, the weighting coefficients $a_1$ and $a_2$ may assume any desired values, often leading to function values considerably greater than one and hence also to increased computational complexity.

Equations 5 and 6 use not only the convex combinations for the relationship between the terms but also standardisation of the aspect values. As described above, this standardisation also means that the function value for the cost function is kept around one in the case of normally occurring aspect values. The combination of the standardisation and the use of the convex combinations results according to the present invention in the cost function arriving at a function value which is very well suited to further numerical calculations.

It is also possible, according to an embodiment of the invention, for the cost function to be expanded to depend on at least one further aspect in addition to those of journey time and weight of fuel consumed. An example of such a further aspect is driving experience. The fact that the cost function according to the invention is created such that new terms can be added to it without altering the relationship between the terms already incorporated in it makes it easy to add further terms. If the cost function is thus caused to depend on three terms, the result is a spherical representation of the cost function. In a similar way to the two original terms, the various terms may be weighted relative to one another.

In other words, the cost function is so configured that the mutual relationship between the at least two original constituent terms of the cost function, in this example those related to journey time and weight of fuel consumed, is maintained when further terms are added to it. At the same time, the at least one further term is given a relationship to the at least two original terms.

According to an embodiment of the present invention, the mutual relationship between the at least two original constituent terms, and that between the at least one further term and the at least two original terms, take the form of convex combinations. The terms also take the form of standardised and squared aspect values. This makes adding new terms to the cost function possible and easy, since the function value for the cost function at the time of their addition substantially maintains its function value for aspect values near to the respective reference value, i.e. the cost function substantially maintains a value near to one.

A cost function which depends on journey time, weight of fuel consumed and driving experience may, according to an embodiment of the present invention, be defined as

$$f = \gamma \beta \left( \frac{T}{T_{ref}} \right)^2 + \gamma (1 - \beta) \left( \frac{M}{M_{ref}} \right)^2 + (1 - \gamma) \left( \frac{\kappa}{\kappa_{ref}} \right)^2 \qquad \text{(eq. 7)}$$

in which

- $T$ is the journey time,
- $T_{ref}$ is a reference journey time,
- $M$ is a weight of fuel consumed,
- $M_{ref}$ is a reference value for a weight of fuel consumed,
- $\kappa$ is a value for driving experience,
- $\kappa_{ref}$ is a reference value for driving experience,
- $\beta$ is a weighting coefficient, where $\beta \in [0.1]$, and
- $\gamma$ is a weighting coefficient, where $\gamma \in [0.1]$.

As indicated above, equation 7 may also be written in a form in which the square root of the expression is used.

One skilled in the art will appreciate that the driving experience aspect may be defined and determined in various different ways. One way of determining a value for the driving experience aspect is, according to an embodiment of the invention, to define it as depending on two terms respectively based on acceleration change for the vehicle and speed experience for the driver.

Acceleration change ("jerking") may be used as a measure of experience of driving, since it is likely to be felt to have adverse effects upon driving comfort. Thus jerking may be defined as

$$j = \dot{a} \qquad \text{(eq. 8)}$$

in which

- $\dot{\alpha}$ is the acceleration change.

A measure of the extent to which jerking affects comfort may also be presented as

$$J = \sum_{k=0}^{N} |j_k| \qquad \text{(eq. 9)}$$

in which jerking at N points is summated. The absolute amount means that jerking in both positive and negative directions is summated, resulting in all types of jerking being regarded as affecting comfort.

The speed experience may be determined as

$$Y = \sum_{k=0}^{N} \max \left( \frac{v_{ref} - v_k}{v_k}, 0 \right) \qquad \text{(eq. 10)}$$

in which

8

- $v_{ref}$ is a reference speed, and
- $v_k$ is an instantaneous speed of the vehicle.

It is here assumed that the speed experience is adversely affected at below the reference speed, which may for example be a permissible speed on a section of road.

If irritation about being above the reference speed is also to be taken into account, the following expression may be used instead for the speed experience:

$$R = \sum_{k=0}^{N} \left| \frac{v_{ref} - v_k}{v_k} \right| \qquad (\text{eq. } 11)$$

in which

- $v_{ref}$ is a reference speed, and
- $v_k$ is an instantaneous speed of the vehicle.

With a definition of driving experience as above, the following expression for the speed experience may be presented:

$$\left( \frac{\kappa}{\kappa_{ref}} \right)^2 = \psi \left( \frac{J}{J_{ref}} \right)^2 + (1 - \psi) \left( \frac{Y}{Y_{ref}} \right)^2 \qquad (\text{eq. } 12)$$

in which

- $\kappa$ is a value for driving experience,
- $\kappa_{ref}$ is a reference value for driving experience,
- $J$ is a value for acceleration change,
- $J_{ref}$ is a reference value for acceleration change,
- $Y$ is a value for speed experience,
- $Y_{ref}$ is a reference value for speed experience, and
- $\psi$ is a weighting coefficient, where $\psi \in [0.1]$.

Equation 7 and equation 12 may also be written together as a total expression for the cost function when it depends on journey time, weight of fuel consumed and driving experience. Such an expression may be written as

$$f = \gamma\beta \left( \frac{T}{T_{ref}} \right)^2 + \gamma(1 - \beta) \left( \frac{M}{M_{ref}} \right)^2 + (1 - \gamma)\psi \left( \frac{J}{J_{ref}} \right)^2 + (1 - \gamma)(1 - \psi) \left( \frac{Y}{Y_{ref}} \right)^2 \qquad (\text{eq.13})$$

in which $\gamma, \beta, \psi, \in [0,1]$ and elements in a vector comprising the weighting coefficients, i.e. elements in the vector

$$\bar{v} = \begin{bmatrix} \gamma\beta \\ \gamma(1 - \beta) \\ (1 - \gamma)\psi \\ (1 - \gamma)(1 - \psi) \end{bmatrix}$$

are added to the value one, since they take the form of convex combinations. As a result of the standardisation, the squaring and the use of the convex combinations as weighting coefficients, this expanded cost function according to the present invention still has a function value which is substantially unchanged after the expansion if the further aspect value is relatively near to its reference value. The function value will thus likewise be substantially one for the expanded function if all the aspect values in the cost function are relatively near to their respective reference values.

The present invention is exemplified above for an implementation in a cruise control but, as a specialist in the field will appreciate, the cost function according to the invention may be employed in many contexts in a motor vehicle. The cost function according to the present invention may be used for substantially all types of regulation which involve a number of different aspects being weighed together in a cost function. Such aspects may possibly even be mutually contradictory. Some non-limitative examples of use of the cost function are in optimisation of a parameter which is related to controlling an intelligent cruise control, an automatic gearbox, regulation of engine response, regulation of an engine fan, regulation of combustion emissions.

As one skilled in the art will appreciate, these various optimisations and regulations require different input signals and are based on different aspects. Specialists will therefore appreciate that the aspects exemplified above such as journey time, weight of fuel consumed and driving experience might in implementations other than for cruise control be replaced in the terms of the cost function by other suitable aspects. In other words, the cost function according to the present invention is not restricted to implementation in cruise controls, nor to depending on the aspects exemplified above.

As indicated above, all of the expressions for the cost functions may be expressed with or without use of a notation comprising a square root.

Specialists will appreciate that a method for creating a cost function according to the present invention may also be implemented in a computer programme which, when executed in a computer, causes the computer to apply the method. The computer programme is contained in a computer programme product's computer-readable medium which takes the form of a suitable memory, e.g. ROM (read-only memory), PROM (programmable read-only memory), EPROM (erasable PROM), flash memory, EEPROM (electrically erasable PROM), a hard disc unit, etc.

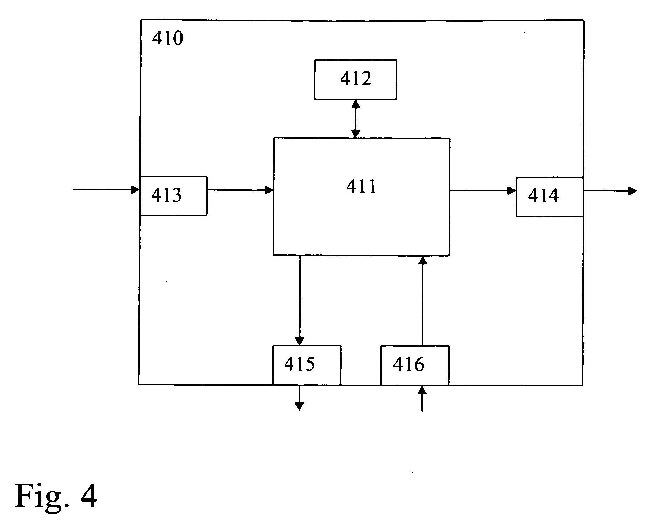

Figure 4 depicts schematically a control unit 410. The control unit 410 comprises a calculation unit 411 which may take the form of substantially any suitable type of processor or microcomputer, e.g. a circuit for digital signal processing (digital signal processor, DSP), or a circuit with a predetermined specific function (application specific integrated circuit, ASIC). The calculation unit 411 is connected to a memory unit 412 which is incorporated in the control unit 410 and which provides the calculation unit 411 with, for example, the stored programme code and/or the stored data which the calculation unit 411 needs for it to be able to perform calculations. The calculation unit 411 is also adapted to storing partial or final results of calculations in the memory unit 412.

The control unit 410 is further provided with respective devices 413, 414, 415, 416 for receiving input signals and sending output signals. These input and output signals may comprise waveforms, pulses or other attributes which the signal receiving devices 413, 416 can detect as information and which can be converted to signals which are processable by the calculation unit 411. The calculation unit 411 is then provided with these signals. The signal sending devices 414, 415 are adapted to converting signals received from the calculation unit 411 in order, e.g. by modulating them, to create output signals which can be conveyed to other parts of the system. The input signals to the system are provided in conventional ways, e.g. by means of sensors, by use of models or in some other similar way known to specialists.

Each of the connections to the respective devices for receiving input signals and sending output signals may take the form of one or more from among a cable, a data bus, e.g. CAN (controller area network) bus, an MOST (media orientated systems transport) bus or some other bus configuration, or a wireless connection. One skilled in the art will appreciate that the aforesaid computer may take the form of the calculation unit 411 and that the aforesaid memory may take the form of the memory unit 412.

The control unit according to the invention is adapted to creating a cost function for use in a motor vehicle, which cost function depends on at least a first and a second term, indicates a mutual relationship between these at least first and second terms and assumes a function value. The control unit is further adapted to configuring the cost function such that dependency on at least one further term can easily be introduced into the cost function. Upon such introduction, the cost function maintains the mutual relationship between the at least first and second terms and also indicates a mutual relationship between the at least one further term and these at least first and second terms.

According to an embodiment of the control unit, the cost function maintains substantially the same function value even after the introduction of one or more further terms if the aspect value for this at least one further term is relatively near to the reference value with which it is standardised.

Specialists will also appreciate that the above control unit may be adapted to effecting the various embodiments of the method according to the invention. The invention relates also to a motor vehicle, e.g. a truck or a bus, comprising at least one such control unit for creating a cost function according to the invention.

The present invention is not restricted to the embodiments described above of the invention but relates to and comprises all embodiments which fall within the protective scope of the attached independent claims.

**Claims**

1. A method for optimisation of a parameter in a motor vehicle, said optimisation being based on a cost function, wherein said cost function depends on at least a first and a second term, indicates a mutual relationship between said at least first and second terms, and assumes a function value, **characterised in that**

- said cost function is configured such that dependency on at least one further term can be introduced into said cost function by configuring said at least first and second terms and said at least one further term to each be based on a respective aspect related to said motor vehicle and to each take the form of a respective squared standardised aspect value, the standardisation being effected by means of a reference value for each aspect; whereby
- said cost function thereupon maintains said mutual relationship between said at least first and second terms and indicates a mutual relationship between said at least one further term and said at least first and second terms.

2. A method according to claim 1, whereby said reference value takes the form of a corresponding value arrived at by means of a conventional cruise control.

3. A method according to any one of claims 1-2, whereby said mutual relationships between said at least first and second terms take the form of convex combinations.

4. A method according to any one of claims 1-3, whereby said mutual relationships between said at least one further term and said first and second terms take the form of convex combinations.

5. A method according to any one of claims 4, whereby said cost function upon said introduction substantially maintains said function value if said at least one further term is based on a standardised aspect value, which standardisation is effected by means of a reference value for each aspect, and said aspect value assumes a value which is near to said reference value.

6. A method according to any one of claims 1-5, whereby said cost function depends on two terms based respectively on journey time and weight of fuel consumed.

7. A method according to claim 6, whereby said cost function is defined according to

$$f = \beta \left( \frac{T}{T_{ref}} \right)^2 + (1 - \beta) \left( \frac{M}{M_{ref}} \right)^2$$

in which

- $T$ is the journey time,
- $T_{ref}$ is a reference journey time,
- $M$ is a weight of fuel consumed,
- $M_{ref}$ is a reference value for a weight of fuel consumed, and
- $\beta$ is a weighting coefficient, where $\beta \in [0.1]$.

8. A method according to any one of claims 1-5, whereby said cost function depends on three terms based respectively on journey time, weight of fuel consumed and driving experience.

9. A method according to claim 8, whereby said cost function is defined according to

$$f = \gamma\beta \left( \frac{T}{T_{ref}} \right)^2 + \gamma(1 - \beta) \left( \frac{M}{M_{ref}} \right)^2 + (1 - \gamma) \left( \frac{\kappa}{\kappa_{ref}} \right)^2$$

in which

- $T$ is the journey time,
- $T_{ref}$ is a reference journey time,
- $M$ is a weight of fuel consumed,
- $M_{ref}$ is a reference value for a weight of fuel consumed,
- $\kappa$ is a value for said driving experience,
- $\kappa_{ref}$ is a reference value for said driving experience,

- $\beta$ is a weighting coefficient, were $\beta \in [0.1]$, and
- $\gamma$ is a weighting coefficient, where $\gamma \in [0.1]$.

**10.** A method according to any one of claim 8-9, whereby the term for driving experience depends on two terms based respectively on acceleration change and speed experience.

**11.** A method according to claim 10, whereby the term for driving experience is defined according to

$$\left(\frac{\kappa}{\kappa_{ref}}\right)^2 = \psi \left(\frac{J}{J_{ref}}\right)^2 + (1 - \psi) \left(\frac{Y}{Y_{ref}}\right)^2$$

in which

- $\kappa$ is a value for said driving experience,
- $\kappa_{ref}$ is a reference value for said driving experience,
- $J$ is a value for acceleration change,
- $J_{ref}$ is a reference value for acceleration change,
- $Y$ is a value for speed experience,
- $Y_{ref}$ is a reference value for speed experience, and
- $\psi$ is a weighting coefficient, where $\psi \in [0.1]$.

**12.** A method according to any one of claims 1-11, whereby said function value is substantially one if said at least first and second terms are each based on a respective standardised aspect value, which standardisation is effected by means of a reference value for each aspect, and the respective aspect values each assume a value which is near to said reference value.

**13.** A method according to any one of claims 1-12, said parameter being optimised being related to control of any of the following:

- an intelligent cruise control,
- an automatic gearbox,
- regulation of an engine response.
- regulation of an engine fan, and
- regulation of combustion emissions.

**14.** A computer programme which comprises programme code and which when said code is executed in a computer causes said computer to apply the method according to any of claims 1-13.

**15.** A computer programme product comprising a computer-readable medium and a computer programme according to claim 14, which programme is contained in said computer-readable medium.

**16.** A control unit adapted for optimisation of a parameter in a motor vehicle, said optimisation being based on a cost function, wherein said cost function depends on at least a first and a second term, indicates a mutual relationship between said at least first and second terms, and assumes a function value, **characterised in that**

- said control unit is adapted to configuring said cost function such that dependency on at least one further term can be introduced into said cost function by configuring said at least first and second terms and said at least one further term to each be based on a respective aspect related to said motor vehicle and to each take the form of a respective squared standardised aspect value, the control unit being adapted to effect the standardisation by means of a reference value for each aspect; whereby
- said cost function thereupon maintains said mutual relationship between said at least first and second terms and indicates a mutual relationship between said at least one further term and said at least first and second terms.

**17.** A motor vehicle **characterised in** said vehicle comprises a control unit according to claim 16.

**Patentansprüche**

1. Verfahren zur Optimierung eines Parameters in einem Kraftfahrzeug, wobei die Optimierung auf einer Kostenfunktion basiert, wobei die Kostenfunktion von wenigstens einem ersten und einem zweiten Term abhängt, die auf eine gegenseitige Beziehung zwischen dem ersten und dem zweiten Termin hinweist und einen Funktionswert annimmt, **dadurch gekennzeichnet, dass**

   - die Kostenfunktion derart ausgebildet ist, dass eine Abhängigkeit von wenigs-tens einem weiteren Term in die Kostenfunktion eingeführt werden kann durch Einstellen der wenigstens ersten und zweiten Terme und dem wenigstens einen weiteren Term, damit jeder auf einem entsprechenden Aspekt bezüglich des Kraftfahrzeuges basiert und um die Form eines entsprechenden quadrierten standardisierten Aspektwerts anzunehmen, wobei die Standardisierung über einen Referenzwert für jeden Aspekt erfolgt; wobei
   - die Kostenfunktion daraufhin die gegenseitige Beziehung zwischen den wenigstens ersten und zweiten Termen beibehält und auf eine gegenseitige Beziehung zwischen dem wenigstens einen weiteren Term und den ersten und zweiten Termen hinweist.

2. Verfahren nach Anspruch 1, wobei der Referenzwert die Form eines entsprechenden Werts durch einen Tempomaten annimmt.

3. Verfahren nach einem der Ansprüche 1-2, wobei die gegenseitigen Beziehungen zwischen den wenigstens ersten und zweiten Termen die Form von Konvexkombinationen annehmen.

4. Verfahren nach einem der Ansprüche 1-3, wobei die gegenseitigen Beziehungen zwischen dem wenigsten einen weiteren Term und den ersten und zweiten Termen die Form von Konvexkombinationen annehmen.

5. Verfahren nach einem der Ansprüche 4, wobei die Kostenfunktion nach dem Einführen im Wesentlichen den Funktionswert beibehält, wenn der wenigstens eine weitere Term auf einem standardisierten Aspektwert basiert, wobei die Standardisierung über einen Referenzwert für jeden Aspekt erfolgt, und der Aspektwert einen Wert annimmt, der nahe dem Referenzwert ist.

6. Verfahren nach einem der Ansprüche 1-5, wobei die Kostenfunktion von zwei Termen abhängt, die jeweils auf einer Fahrtdauer und einem Gewicht von verbrauchtem Brennstoff basieren.

7. Verfahren nach Anspruch 6, wobei die Kostenfunktion definiert ist als

$$f = \beta \left( \frac{T}{T_{ref}} \right)^2 + (1 - \beta) \left( \frac{M}{M_{ref}} \right)^2$$

wobei

   - $T$ die Fahrtdauer ist,
   - $T_{ref}$ eine Referenzfahrtdauer ist,
   - $M$ ein Gewicht von verbrauchtem Brennstoff ist,
   - $M_{ref}$ ein Referenzwert für ein Gewicht von verbrauchtem Brennstoff ist, und
   - $\beta$ ein Gewichtungskoeffizient ist, wobei $\beta \in [0.1]$ ist.

8. Verfahren nach einem der Ansprüche 1-5, wobei die Kostenfunktion von drei Termen abhängt, die jeweils auf einer Fahrtdauer, einem Gewicht von verbrauchtem Brennstoff und einem Fahrgefühl basieren.

9. Verfahren nach Anspruch 8, wobei die Kostenfunktion definiert ist, als

$$f = \gamma \beta \left( \frac{T}{T_{ref}} \right)^2 + \gamma (1 - \beta) \left( \frac{M}{M_{ref}} \right)^2 + (1 - \gamma) \left( \frac{\kappa}{\kappa_{ref}} \right)^2$$

wobei

- T die Fahrtdauer ist,
- $T_{ref}$ eine Referenzfahrdauer ist,
- M ein Gewicht von verbrauchtem Brennstoff ist,
- $M_{ref}$ Referenzwert für ein Gewicht von verbrauchtem Brennstoff ist,
- $\kappa$ ein Wert für das Fahrgefühl ist,
- $\kappa_{ref}$ ein Referenzwert für das Fahrgefühl ist,
- $\beta$ ein Gewichtungskoeffizient ist, wobei $\beta \in [0.1]$ ist, und
- $\gamma$ ein Gewichtungskoeffizient ist, wobei $\gamma \in [0.1]$ ist.

**10.** Verfahren nach einem der Ansprüche 8-9, wobei der Term für das Fahrgefühl von zwei Termen abhängt, die jeweils auf einer Beschleunigungsänderung und einem Geschwindigkeitsgefühl basieren.

**11.** Verfahren nach Anspruch 10, wobei der Term für das Fahrgefühl definiert ist als

$$\left(\frac{\kappa}{\kappa_{ref}}\right)^2 = \psi \left(\frac{J}{J_{ref}}\right)^2 + (1 - \psi) \left(\frac{Y}{Y_{ref}}\right)^2$$

wobei

- $\kappa$ ein Wert für das Fahrgefühl ist,
- $\kappa_{ref}$ ein Referenzwert für das Fahrgefühl ist,
- J ein Wert für eine Beschleunigungsänderung ist,
- $J_{ref}$ ein Referenzwert für eine Beschleunigungsänderung ist,
- Y ein Wert für ein Geschwindigkeitsgefühl ist,
- $Y_{ref}$ ein Referenzwert für ein Geschwindigkeitsgefühl ist, und
- $\Psi$ ein Gewichtungskoeffizient ist, wobei $\Psi \in [0.1]$ ist.

**12.** Verfahren nach einem der Ansprüche 1-11, wobei die Kostenfunktion im Wesentlichen eins ist, wenn die wenigstens ersten und zweiten Terme jeweils auf einem entsprechenden standardisierten Aspektwert basieren, wobei die Standardisierung durch einen Referenzwert für jeden Aspekt erfolgt, und jeder der entsprechenden Aspektwerte einen Wert annimmt, welcher nahe dem Referenzwert ist.

**13.** Verfahren nach einem der Ansprüche 1-12, wobei die zu optimierenden Parameter vorgesehen sind zum Steuern von jedem der folgenden:

- einem intelligenten Tempomat,
- einem automatischen Getriebe,
- Regelung eines Ansprechverhaltens eines Motors,
- Regelung eines Motorlüfters, und
- Regelung von Verbrennungsemissionen

**14.** Computerprogramm, welches einen Programmcode umfasst und welches dann, wenn der Code in einem Computer ausgeführt wird, den Computer dazu veranlasst, das Verfahren nach einem der Ansprüche 1-13 anzuwenden.

**15.** Computerprogrammprodukt, umfassend ein computerlesbares Medium und ein Computerprogramm nach Anspruch 14, wobei das Programm in dem computerlesbaren Medium beinhaltet ist.

**16.** Steuereinheit, ausgebildet zur Optimierung eines Parameters in einem Kraftfahrzeug, wobei die Optimierung auf einer Kostenfunktion basiert, wobei die Kostenfunktion von wenigstens einem ersten und zweiten Term abhängt, die auf eine gegenseitige Beziehung zwischen dem ersten und zweiten Term hinweist und einen Funktionswert annimmt, **dadurch gekennzeichnet, dass**

- die Steuereinheit dazu ausgebildet ist zum Einstellen der Kostenfunktion, derart, dass die Abhängigkeit von

14

wenigstens einem weiteren Term in die Kostenfunktion eingeführt werden kann durch Einstellen der wenigstens ersten und zweiten Terme und des wenigstens einen weiteren Terms, damit jeder auf einem entsprechenden Aspekt bezüglich des Kraftfahrzeuges basiert und die Form eines entsprechenden quadrierten standardisierten Aspektwerts annimmt, wobei die Steuereinheit ausgebildet ist zum Beeinflussen der Standardisierung durch Mittel eines Referenzwerts für jeden Aspekt; wobei

- die Kostenfunktion darauf die gegenseitige Beziehung zwischen den wenigstens ersten und zweiten Termen beibehält und auf eine gegenseitige Beziehung zwischen dem wenigstens einen weiteren Term und den wenigstens ersten und zweiten Termen hinweist.

**17.** Kraftfahrzeug, **dadurch gekennzeichnet, dass** das Fahrzeug eine Steuereinheit nach Anspruch 16 umfasst.

**Revendications**

**1.** Procédé d'optimisation d'un paramètre dans un véhicule à moteur, ladite optimisation étant basée sur une fonction de coût, ladite fonction de coût dépendant d'au moins un premier et un deuxième termes, indiquant une relation mutuelle entre lesdits premier et deuxième termes au moins, et supposant une valeur de fonction, **caractérisé en ce que** :

- ladite fonction de coût est configurée de telle sorte qu'une dépendance à au moins un autre terme puisse être introduite dans ladite fonction de coût par la configuration desdits premier et deuxième termes, au moins, et dudit autre terme, au nombre d'au moins un, de façon à ce que chacun soit fonction d'un aspect respectif associé audit véhicule à moteur et à ce que chacun prenne la forme d'une valeur d'aspect standardisée mise au carré respective, la standardisation étant effectuée à l'aide d'une valeur de référence pour chaque aspect, selon quoi :
- ladite fonction de coût conserve alors ladite relation mutuelle entre lesdits premier et deuxième termes au moins et indique une relation mutuelle entre ledit autre terme, au nombre d'au moins un, et lesdits premier et deuxième termes au moins.

**2.** Procédé selon la revendication 1, selon lequel ladite valeur de référence prend la forme d'une valeur correspondante à laquelle on parvient à l'aide d'une commande de vitesse de croisière classique.

**3.** Procédé selon l'une quelconque des revendications 1 à 2, selon lequel lesdites relations mutuelles entre lesdits premier et deuxième termes au moins prennent la forme de combinaisons convexes.

**4.** Procédé selon l'une quelconque des revendications 1 à 3, selon lequel lesdites relations mutuelles entre ledit autre terme, au nombre d'au moins un, et lesdits premier et deuxième termes prennent la forme de combinaisons convexes.

**5.** Procédé selon l'une quelconque des revendications 1 à 4, selon lequel ladite fonction de coût lors de ladite introduction conserve sensiblement ladite valeur de fonction si ledit autre terme, au nombre d'au moins un, est fonction d'une valeur d'aspect standardisée, cette standardisation étant effectuée à l'aide d'une valeur de référence pour chaque aspect, et ladite valeur d'aspect supposant une valeur qui est proche de ladite valeur de référence.

**6.** Procédé selon l'une quelconque des revendications 1 à 5, selon lequel ladite fonction de coût dépend de deux termes basés respectivement sur le temps de voyage et sur le poids de carburant consommé.

**7.** Procédé selon la revendication 6, selon lequel ladite fonction de coût est définie selon :

$$f = \beta \left( \frac{T}{T_{ref}} \right)^2 + (1 - \beta) \left( \frac{M}{M_{ref}} \right)^2$$

où:

- T est le temps de voyage,
- $T_{ref}$ est un temps de voyage de référence,
- M est un poids de carburant consommé,

- $M_{ref}$ est une valeur de référence pour un poids de carburant consommé, et
- β est un coefficient de pondération, pour lequel β ∈ [0,1].

**8.** Procédé selon l'une quelconque des revendications 1 à 5, selon lequel ladite fonction de coût dépend de trois termes basés respectivement sur le temps de voyage, le poids de carburant consommé et l'expérience de conduite.

**9.** Procédé selon la revendication 8, selon lequel ladite fonction de coût est définie selon :

$$f = \gamma\beta\left(\frac{T}{T_{ref}}\right)^2 + \gamma(1-\beta)\left(\frac{M}{M_{ref}}\right)^2 + (1-\gamma)\left(\frac{\kappa}{\kappa_{ref}}\right)^2$$

où :

- T est le temps de voyage,
- $T_{ref}$ est un temps de voyage de référence,
- M est un poids de carburant consommé,
- $M_{ref}$ est une valeur de référence pour un poids de carburant consommé,
- κ est une valeur pour ladite expérience de conduite,
- $\kappa_{ref}$ est une valeur de référence pour ladite expérience de conduite,
- β est un coefficient de pondération, pour lequel β ∈ [0,1], et
- γ est un coefficient de pondération, pour lequel γ ∈ [0,1].

**10.** Procédé selon l'une quelconque des revendications 8 à 9, selon lequel le terme de l'expérience de conduite dépend de deux termes basés respectivement sur le changement d'accélération et l'expérience de vitesse.

**11.** Procédé selon la revendication 10, selon lequel le terme de l'expérience de conduite est défini selon :

$$\left(\frac{\kappa}{\kappa_{ref}}\right)^2 = \Psi\left(\frac{J}{J_{ref}}\right)^2 + (1-\Psi)\left(\frac{Y}{Y_{ref}}\right)^2$$

où :

- κ est une valeur pour ladite expérience de conduite,
- $\kappa_{ref}$ est une valeur de référence pour ladite expérience de conduite,
- J est une valeur pour le changement d'accélération,
- $J_{ref}$ est une valeur de référence pour le changement d'accélération,
- Y est une valeur pour l'expérience de vitesse,
- $Y_{ref}$ est une valeur de référence pour l'expérience de vitesse, et
- ψ est un coefficient de pondération, pour lequel ψ ∈ [0,1].

**12.** Procédé selon l'une quelconque des revendications 1 à 11, selon lequel ladite valeur de fonction est sensiblement de un si lesdits premier et deuxième termes au moins sont chacun fonction d'une valeur d'aspect standardisée respective, cette standardisation étant effectuée à l'aide d'une valeur de référence pour chaque aspect, et les valeurs d'aspect supposant chacune une valeur qui est proche de ladite valeur de référence.

**13.** Procédé selon l'une quelconque des revendications 1 à 12, ledit paramètre qui est optimisé étant associé à la commande de l'un quelconque des éléments suivants :

- un régulateur automatique de vitesse intelligent,
- une boîte de vitesses automatique,
- la régulation d'une réponse de moteur,
- la régulation d'un ventilateur de moteur, et
- une régulation des émissions de combustion.

**14.** Programme informatique, qui comprend un code de programme et qui, lorsque ledit code est exécuté dans un ordinateur, provoque l'application par ledit ordinateur du procédé selon l'une quelconque des revendications 1 à 13.

**15.** Produit de programme informatique comprenant un support lisible par un ordinateur et un programme informatique selon la revendication 14, ce programme étant contenu dans ledit support lisible par un ordinateur.

**16.** Unité de commande adaptée pour l'optimisation d'un paramètre dans un véhicule à moteur, ladite optimisation étant basée sur une fonction de coût, ladite fonction de coût dépendant d'au moins un premier et un deuxième termes, indiquant une relation mutuelle entre lesdits premier et deuxième termes au moins, et supposant une valeur de fonction, **caractérisée en ce que** :

- ladite unité de commande est adaptée de façon à configurer ladite fonction de coût de telle sorte qu'une dépendance d'au moins un autre terme puisse être introduite dans ladite fonction de coût par la configuration desdits premier et deuxième termes au moins et dudit autre terme, au nombre d'au moins un, de façon à ce que chacun soit fonction d'un aspect respectif associé audit véhicule à moteur et à ce que chacun prenne la forme d'une valeur d'aspect standardisée mise au carré respective, l'unité de commande étant adaptée pour effectuer la standardisation à l'aide d'une valeur de référence pour chaque aspect, selon quoi :
- ladite fonction de coût conserve alors ladite relation mutuelle entre lesdits premier et deuxième termes au moins et indique une relation mutuelle entre ledit autre terme, au nombre d'au moins un, et lesdits premier et deuxième termes au moins.

**17.** Véhicule à moteur, **caractérisé en ce que** ledit véhicule comprend une unité de commande selon la revendication 16.

Fig. 1

Fig. 2

Fig.3a

Fig. 3b

Fig. 4

## REFERENCES CITED IN THE DESCRIPTION

**Patent documents cited in the description**

• US 6076622 A

**Non-patent literature cited in the description**

• Look-Ahead control for heavy trucks to minimize trip time and fuel consumption. **HELLSTROM E et al.** Control engineering Practice. Pergamon Press Oxford, 01 February 2009, vol. 17, 245-254